# EUROPEAN PATENT APPLICATION

(11) **EP 3 488 677 A1**
(43) Date of publication of application: **29.05.2019**
(21) Application number: 18208594.4
(22) Date of filing: 27.11.2018
(51) Int. Cl.: A01B 59/06, A01B 63/108, A01D 34/66, A01D 34/86

(54) **TOOL SUSPENSION**

(30) Priority: 27.11.2017 DK PA201770891
(71) Applicant: Kaastrup, Søren, 7870 Roslev (DK)
(72) Inventor: Kaastrup, Søren, 7870 Roslev (DK)
(74) Representative: Nielsen, Leif

(57) **Abstract**

A tool carrier (1) for a vehicle (2), preferably a tractor, is described, said tool carrier comprising a first frame (3) for mounting the tool carrier (1), and a second frame (4) for mounting a tool (5), where the tool carrier (1) comprises a swing-arm arrangement (6), where the tool carrier (1) has at least one extreme position with the second frame (4) in a position on one or other side of the vehicle's direction of motion (7), where the tool carrier (1) has a transport position with the second frame (4) in a position ahead of the vehicle's direction of motion (7), where the tool carrier (1) is provided with a first locking arrangement (8) for keeping the second frame (4) in a position between the extreme positions and the transport position, and where the tool carrier has actuating means (9), and where the swing-arm arrangement (6) comprises a first arm (10) and a second arm (11) in a plane that is substantially perpendicular to the direction of motion (7), the first arm (10) being rotatable about a first shaft (12), which connects the first arm (10) to the first frame (3), the second arm (4) being rotatable about a second shaft (13), which connects the first arm (10) and the second arm (11), and the second frame (4) being rotatable about a third shaft (14), which connects the second frame (4) to the second arm (11), said shafts (12, 13, 14) being substantially parallel to one another and parallel to the direction of motion.

## Description

### Field of the invention

The present invention relates to a tool carrier for a vehicle, preferably a tractor, which comprises a first frame for mounting the tool carrier and a second frame or attachment for mounting a tool, where the tool carrier comprises a swing-arm arrangement consisting of two arms, which is pivotally mounted between the first and the second frame, where the tool carrier has at least one extreme position with the second frame in a position on the side of the vehicle's direction of motion, where the tool carrier has a transport position with the second frame in a position ahead of the vehicle's direction of motion.

"Direction of motion" means, in the present application, the direction in which the vehicle is moving or is desired to be moving in, so that the vehicle has a direction of motion, even if it is standing still. The direction of motion is an axis that coincides with a longitudinal, vertically oriented median plane through the vehicle, so that a parallel median plane through the second frame coincides with the vehicle's median plane in the transport position and is displaced sideways from the vehicle's median plane between the transport position and the extreme position.

### Background of the invention

When tilling areas of land, farmers want a certain condition of the ground, where the uppermost part of the ground is worked thoroughly to a depth of approximately five centimetres, while the layers of soil under the worked layer of soil will remain solid. This has been shown to produce the best seed bed for the selected crops and then the highest yield.

The general procedure when tilling a field is as follows:
a) the soil is ploughed to a depth of up to 25 centimetres,
b) the soil is compacted with a land packer or a roller,
c) the soil is harrowed until sowing,
d) a selected crop is sown, and
e) the soil is compacted around the seeds with a land packer or roller.

The disadvantage of this procedure for tilling a field is that the farmer will drive over the field at least once for each of the aforementioned types of soil treatment, which is expensive and time-consuming.

As a solution for this, agricultural machinery manufacturers make combination machines, where two or more of the aforementioned types of soil treatment are carried out during the same passage across the field.

It would be ideal to be able to carry out all five types of soil treatment in one go, but this would require a large and long combination machine and has not so far been possible.

For example, a plough is being manufactured, which is equipped with a land packer that is pulled behind the plough. Thus, a-b are combined in a single operation.

Another example of a combination machine is a harrowing/sowing/rolling machine, where the aforementioned types of soil treatment c-e are carried out in a single operation.

Both examples are pulled behind a vehicle, for example a tractor.

The disadvantage of the first example is that the machine is difficult to manoeuvre over fields that are small or have corners, as it is very difficult to reverse with this type of combination machine.

DK 177331 B1 describes a tool carrier for a tractor, where the tool carrier comprises a swing-arm arrangement, which uses two swing arms to hold the tool in position. The disadvantages of this design are that tools in the extreme position may be at a great distance from the vehicle, resulting in large forces and wear on the front lift system, and many actuators are required for moving the tool.

DK 177240 B1 describes a tool carrier for a tractor, which uses an arrangement of split telescopic tubes to offset the tool close to the tractor to reduce wear on the vehicle. A disadvantage with DK 177240 is that the tool is difficult and expensive to produce, and that the telescopic arrangement and actuators are sensitive to dirt and contaminants in connection with earthwork.

### Purpose of the invention

The purpose of the invention is to provide a tool carrier for mounting on a vehicle, where the tool carrier makes it possible to work a piece of land on each side of the vehicle or ahead of the vehicle and at the same time makes it possible to drive with a tool on the road in a position ahead of the vehicle.

### Description of the invention

This is achieved according to the present invention with a tool carrier for a vehicle, preferably a tractor of the type mentioned in the introduction, which has the distinctive feature that the swing-arm arrangement comprises a first arm and a second arm in a plane that is substantially perpendicular to the direction of motion, in that the first arm is rotatable about a first shaft that connects the first arm to the first frame, in that the second arm is rotatable about a second shaft that connects the first and the second arm, in that the first arm and the second arm are provided with mutually interacting stops, which define the extreme positions of the tool and provide weight transfer from the first arm to the tool, and in that the second frame is rotatable about a third shaft, which connects the second frame to the second arm, and said shafts are substantially parallel to each other and parallel to the direction of motion.

The tool will preferably be a front-mounted tool carrier, which is suspended via the first frame in a three-point lift arrangement.

Consequently, a piece of land may be worked alternately on the right and left side of the vehicle, in such a way that the vehicle does not come into contact with the piece of land subsequently or previously. At the same time, it allows driving with a tool on the road, as the tool can be brought into a position close to and ahead of the vehicle.

The tool carrier is suitable for soil treatment tools, such as harrows, rollers and knife rollers. Furthermore, the tool carrier may be used with other tools, including for example lawnmowers.

The invention reduces wear on the vehicle's front power lift including the vehicle's front wheel as the tool is kept held close to the vehicle. At the same time the invention can be produced easily and cheaply, as only a single actuating means is required for operation.

According to a further embodiment, the tool carrier according to the invention has the distinctive feature that it only comprises one first arm and only one second arm.

According to a further embodiment, the tool carrier according to the invention has the distinctive feature that the second frame comprises a fourth shaft, which is substantially perpendicular to the direction of motion, and connects a first and a second part of the second frame.

Consequently, the tool can swivel and follow the vehicle's direction during soil treatment, when the vehicle changes direction on the field, and steerability during use is increased.

According to a further embodiment, the tool carrier according to the invention has the distinctive feature that it is provided with a second locking arrangement, which locks the tool against rotation about the third shaft, where the locking arrangement comprises a track in the second frame and a plate component, which is mounted movably on the second arm. In a first locked position, the plate component is engaged with the track. In a second unlocked position the plate component is outside the track.

Consequently, the tool remains locked against rotation about the third shaft during transport. Locking of rotation about the third shaft is advantageous, as the tool does not turn towards the underlying surface during transport, thus avoiding any tool damage during transport.

In a further embodiment, the tool carrier according to the invention has the distinctive feature that the plate component of the locking arrangement has an end face that is turned towards the first frame. Said end face interacts with a bearing surface on the first frame or the first arm. The end face has a longer extent in a central section than at the transition to the lateral faces of the plate component. The locking mechanism is in a locked position when the tool is in the transport position with the first arm and second arm perpendicular to the direction of motion, where the central section is up against the bearing surface. The locking mechanism is in the unlocked position when the tool swings out to one or other side.

Consequently, the tool remains locked against rotation about the third shaft in the transport position automatically without separate action by for example the driver of the vehicle. This avoids possible damage to the tool during transport owing to locking in the transport position being forgotten.

According to a further embodiment, the tool carrier according to the invention has the distinctive feature that the plate components of the second locking arrangement comprise at least two plate components, which are connected to a compression spring.

Consequently, the locking arrangement may be activated even if the tool is rotated about the third shaft, so that the plate component cannot come up against the track. The compression spring compresses on activation of the mechanism alongside the first frame, and decompresses again when the tool is turned, so that the track and the plate component come into contact.

According to a further embodiment, the tool carrier according to the invention has the distinctive feature that the second locking arrangement comprises a plate component that connects the first and the second plate component, in such a way that it limits the maximum length of the whole locking arrangement in the direction between the first and the second frame.

Consequently, the second locking arrangement always complies with the maximum length necessary for safe operation. This is ensured regardless of the forces exerted by the compression spring and an optional tension spring.

According to a further embodiment, the tool carrier according to the invention has the distinctive feature that the second locking arrangement comprises at least one tension spring, which is connected to the plate component and the second frame. The tension spring works in such a way that the locking arrangement is in the unlocked position when the central section of the end face is not up against the bearing surface. The locking arrangement is in the locked position when the central section of the end face is up against the bearing surface.

Consequently, the locking mechanism goes automatically into the unlocked position, when the first arm swings out from the vertical transport position to another position. The tool is thus ready for use without further manual interaction.

According to a further embodiment, the tool carrier according to the invention has the distinctive feature that the first arm and the second arm are provided with mutually interacting stops, which define the extreme positions of the tool. The mutually interacting stops provide weight transfer from the first arm to the tool.

Consequently, the tool is stopped in an extreme position, reducing wear on the locking mechanism and/or the actuating means.

Furthermore, the stop provides weight transfer from the first arm to the tool. The weight press on the tool in the extreme position is increased thereby.

According to a further embodiment, the tool carrier according to the invention has the distinctive feature that the first frame and the second arm comprise a cam track and an interacting cam, preferably a cam roller, which defines the swivelling motion of the tool. The cam track and the interacting cam lock the tool on the side that the first arm is on, when the first arm is not in the vertical position.

The cam track operates as a locking mechanism, so that the tool remains on the side to which the actuator is actuated, when forces are exerted on the tool during use. Furthermore, the cam track and cam define the swivelling motion, so that the second arm, which stands perpendicular to the direction of motion in the transport position, swivels out towards the side to which the actuator moves the first arm.

According to a further embodiment, the tool carrier according to the invention has the distinctive feature that the second arm comprises two arm parts, which are fitted perpendicular to one another, with one arm part provided at an end farthest from the second shaft, so that the second arm is L-shaped.

A simple and effective implementation of the described locking mechanism in the transport position is thus obtained.

According to a further embodiment, the tool carrier according to the invention has the distinctive feature that it only comprises one actuating means, preferably a linear double-acting hydraulic actuator.

The fact that the tool can be made with a single actuating means reduces the production cost and complexity considerably. Furthermore, this simplifies and reduces the cost of maintenance of the tool carrier. The linear double-acting hydraulic actuator may be fitted at an angle of approx. 15-25 degrees, preferably 18-20 degrees, between the direction it is actuated in and the first arm in the vertical position. This optimizes the distance the tool can be from the tractor in the extreme position. At the same time the cam and cam track ensure the intended movement of the tool.

### Description of the drawing

The invention is explained in greater detail hereunder, referring to the accompanying drawings, where
- Fig. 1: shows a vehicle, with the tool carrier mounted and the tool in a working position, i.e. not in the transport position,
- Fig. 2: shows the tool carrier with the tool in a working position,
- Fig. 3: shows a vehicle with the tool carrier mounted and the tool in the transport position,
- Fig. 4: shows a vehicle with the tool carrier mounted and the tool in the transport position,
- Fig. 5: shows a vehicle with the tool carrier mounted and the tool in a working position,
- Fig. 6: shows the tool carrier with the tool in a working position,
- Fig. 7: shows a detail of the tool carrier mounted on a vehicle with a tool, where the tool carrier is in an extreme position,
- Fig. 8: shows a detail of the interacting stops in an extreme position,
- Fig. 9: shows a detail of the tool carrier with a tool,
- Fig. 10: shows the tool carrier from below,
- Fig. 11: shows a detail of the tool carrier with tool mounted on a vehicle,
- Fig. 12: shows a detail of the tool carrier,
- Fig. 13: shows a detail of the tool carrier viewed from the side,
- Fig. 14: shows a detail of the tool carrier, focusing on the cam and cam track, and
- Fig. 15: shows a detail of the tool carrier with a tool.

### List of reference symbols

- 1.: Tool carrier
- 2.: Vehicle
- 3.: First frame
- 4.: Second frame
- 5.: Tool
- 6.: Swing-arm arrangement
- 7.: Direction of motion of the vehicle
- 8.: First locking arrangement
- 9.: Actuating means
- 10.: First arm
- 11.: Second arm
- 11'.: Arm part
- 11".: Arm part
- 12.: First shaft
- 12'.: Rotation axis about which the first shaft rotates
- 13.: Second shaft
- 13'.: Rotation axis about which the second shaft rotates

- 14.: Third shaft
- 14'.: Rotation axis about which the third shaft rotates
- 15.: Fourth shaft
- 15'.: Rotation axis about which the fourth shaft rotates
- 16.: First part of second frame
- 17.: Second part of second frame
- 18.: Second locking arrangement
- 19.: Track
- 20.: Plate component
- 21.: End face
- 22.: Bearing surface
- 23.: Central section
- 24.: First plate component
- 25.: Second plate component
- 26.: Compression spring
- 27.: Tension spring
- 28.: Third plate component
- 29'.: Stop
- 29".: Stop
- 30.: Cam track
- 31.: Cam
- 32.: Cam roller
- 33.: Bracket for mounting on the lift
- 34.: Bracket for mounting on the lift
- 35.: Bracket for mounting on the top link
- 36.: Lift arm
- 37.: Top link

In the description of the figures, identical or equivalent elements will be designated with the same reference symbols in the various figures. Therefore explanations will not be given for all details in connection with each individual figure/embodiment.

### Detailed description of the invention

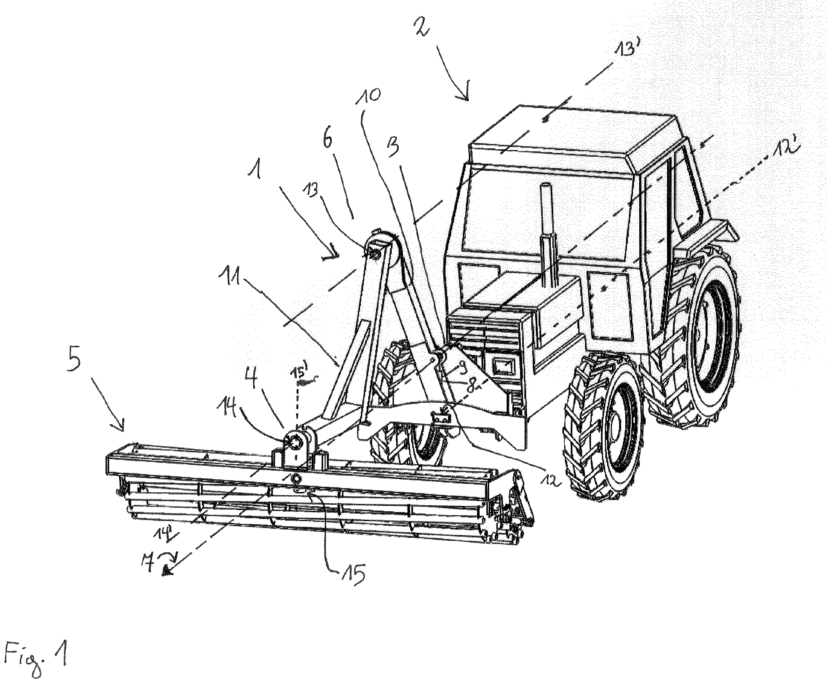

Fig. 1 shows a vehicle 2 with the tool carrier 1 mounted on the vehicle 2 and the tool 5 mounted on the tool carrier 1. The swing-arm arrangement 6, which connects the first frame 3 and the second frame 4, comprises a first arm 10 and a second arm 11.

The tool carrier is in a working position, i.e. in a position other than the transport position. The tool 1 is held close to the vehicle 2 viewed along the direction of motion 7. This means that the forces on the front power lift of the vehicle 2 are minimized. The first arm 10 rotates about the first shaft 12 about a rotation axis 12'. The second arm 11 rotates about a second shaft 13 about a rotation axis 13'. The tool 5 rotates about a third shaft 14 about a rotation axis 14'. Optionally, the tool carrier may comprise a fourth shaft 15, which connects a first part 16 and a second part 17 of the second frame, and the tool 5 rotates about said shaft, about a rotation axis 15'.

The tool carrier comprises a first locking arrangement 8 and an actuating means 9.

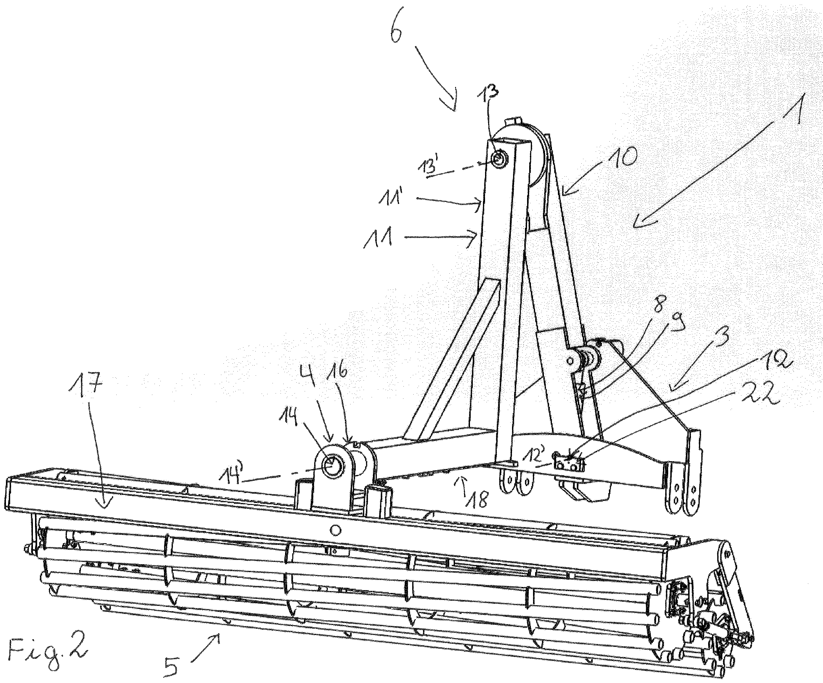

Fig. 2 shows the tool carrier 1 with the tool 5 in a working position. The tool comprises a first frame 3 and a second frame 4. The second frame 4 comprises a first part 16 and a second part 17. The swing-arm arrangement comprises a first arm 10 and a second arm 11. The tool carrier also comprises a first locking arrangement 8 and an actuating means 9. Optionally, the second arm may comprise two parts 11', 11", which form an L. Optionally, the tool carrier may comprise a second locking arrangement 18.

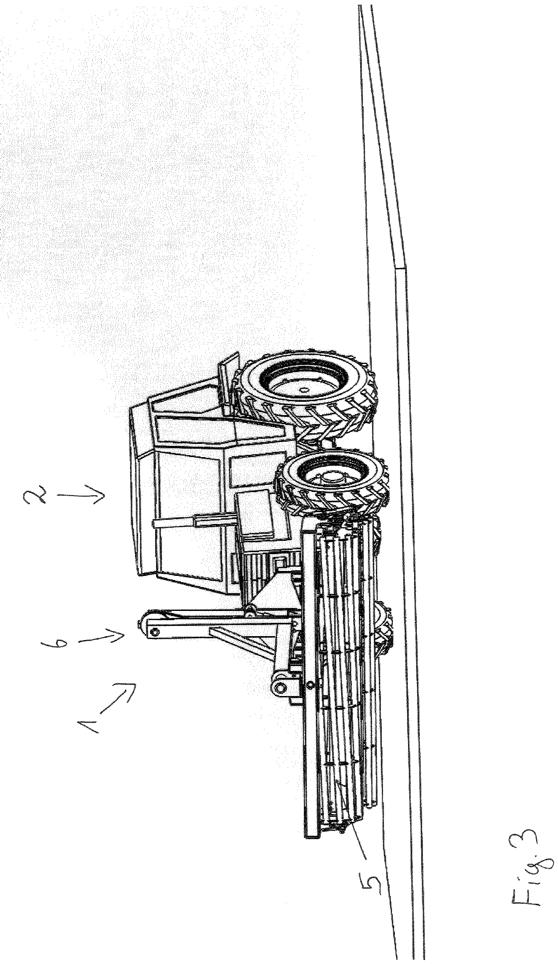

Fig. 3 shows a vehicle 2 with the tool carrier 1 mounted on the vehicle and with the tool 5 mounted on the tool carrier 1. The tool is in the transport position close to the vehicle. This means that the vehicle 2 can travel on public roads between work sites with a tool 5 mounted in the tool carrier 1 with a limited overhang. Optionally, the tool may be locked with a second locking arrangement 18.

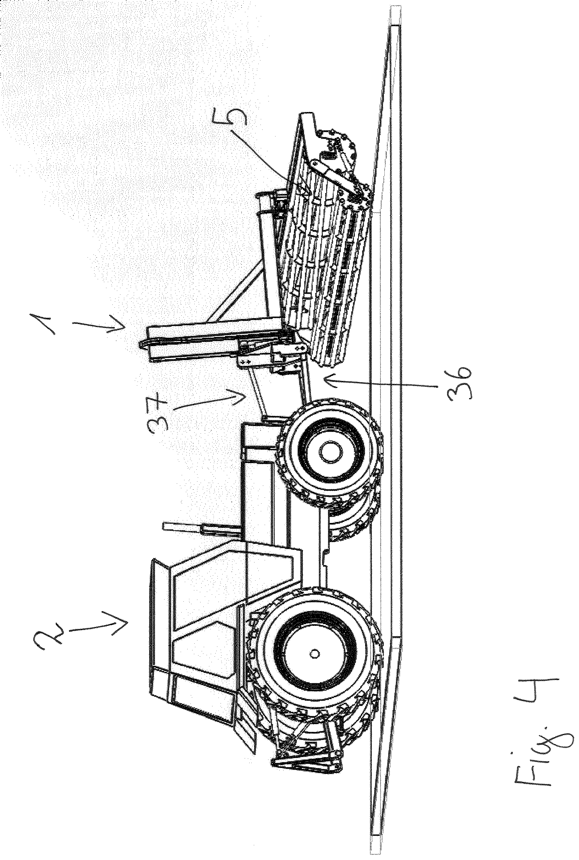

Fig. 4 shows a vehicle 2 with the tool carrier 1 mounted on the vehicle with a lift arm 36 and a top link 37 and with the tool 5 mounted on the tool carrier 1. The tool is in the transport position close to the vehicle. This means that the vehicle 2 can travel on public roads between work sites with a tool 5 mounted in the tool carrier 1 with a limited overhang.

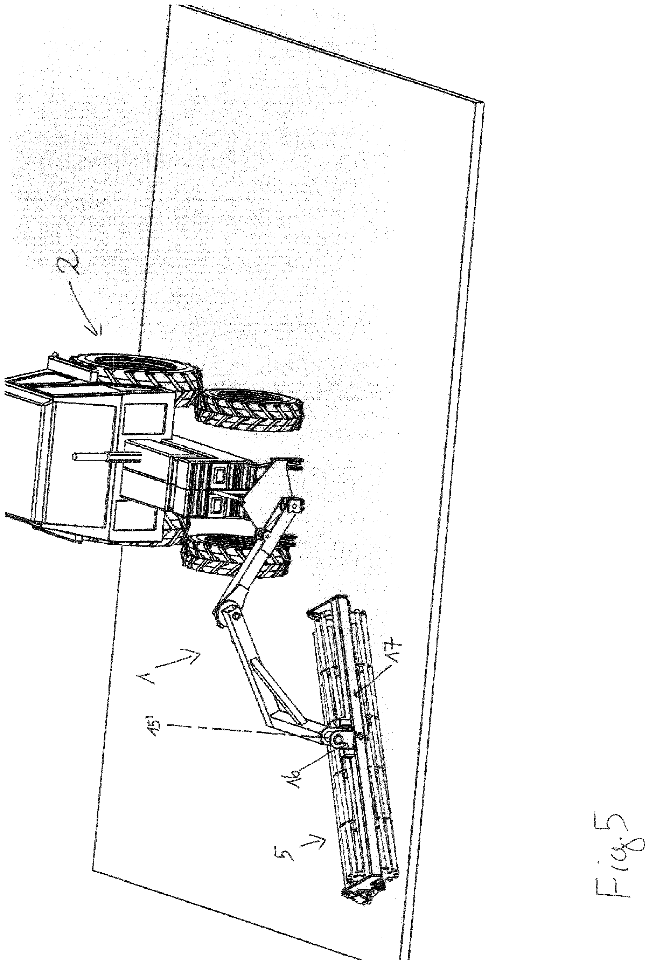

Fig. 5 shows a vehicle 2 with the tool carrier 1 mounted on the vehicle and with the tool 5 mounted on the tool carrier 1. The tool is in a working position. The tool 5 may thus operate over a range that the vehicle does not touch while driving. The tool is rotated about a fourth rotation axis 15'.

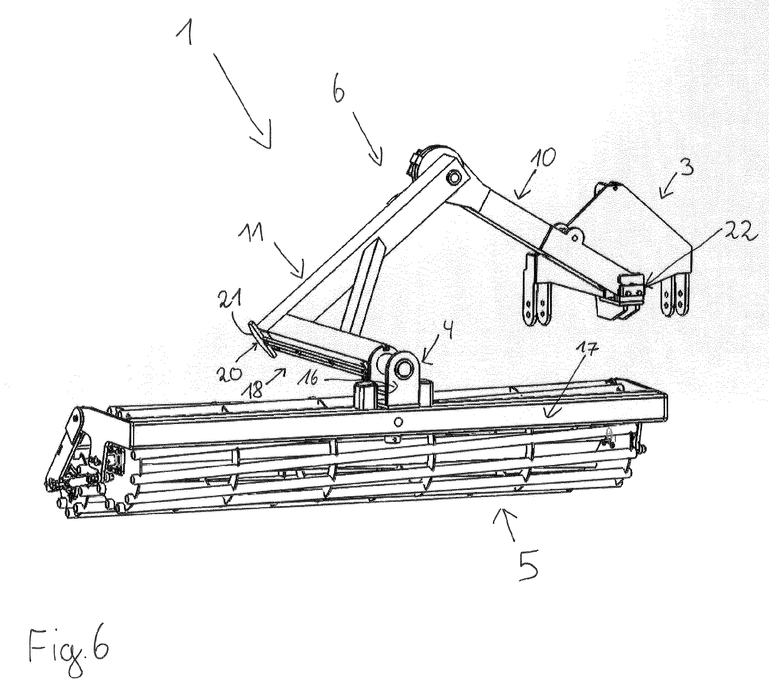

Fig. 6 shows the tool carrier 1 with the tool 5 mounted in a working position. The tool is optionally provided with a second locking arrangement, which comprises a track (not shown), a plate component 20 with an end face 21 with a central section (not shown) and a bearing surface 22.

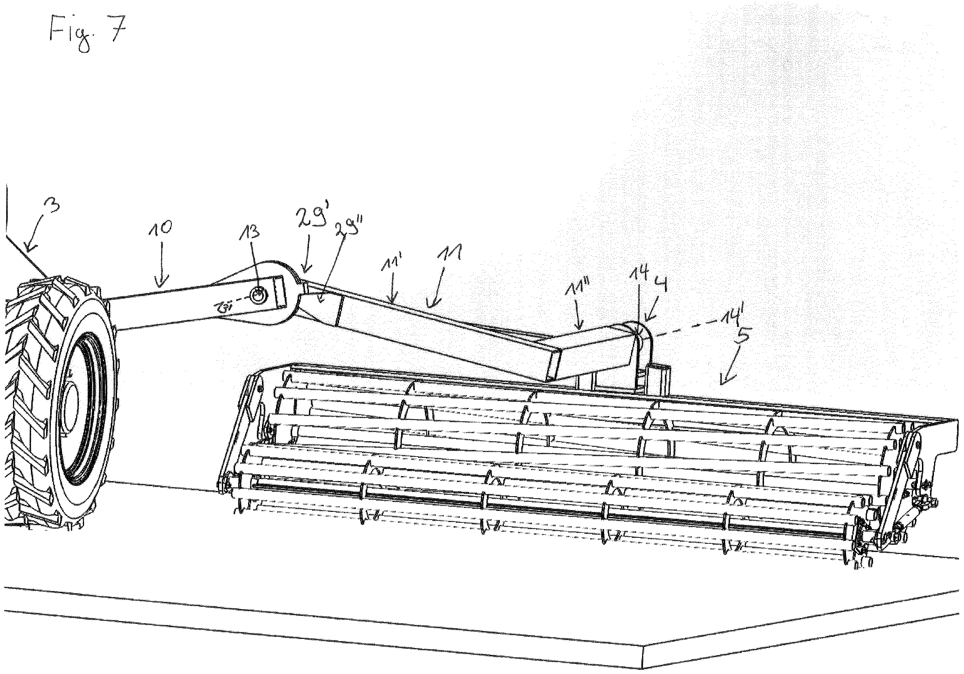

Fig. 7 shows the tool carrier 1 with the tool 5 mounted on the tool carrier 1. The tool is in an extreme position. Two interacting stops 29', 29" define the extreme position and effect weight transfer from the first arm 10 to the tool 5.

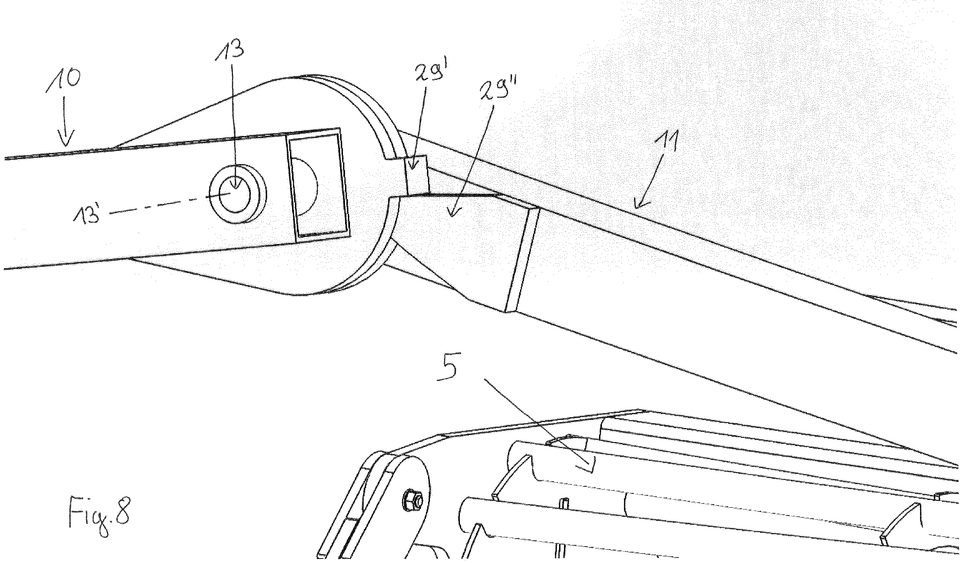

Fig. 8 shows a detail of the tool carrier 1 with the tool 5. The tool carrier is in an extreme position, which is defined by two interacting stops 29', 29".

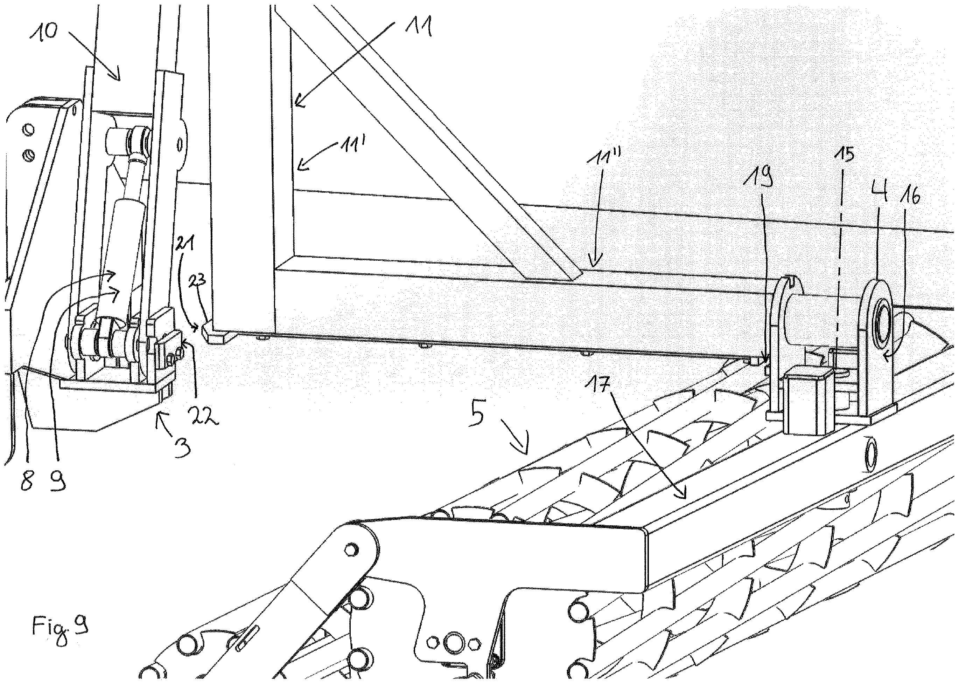

Fig. 9 shows a detail of the tool carrier 1 with the tool 5. The tool comprises a second locking arrangement 18, which comprises a track 19, a plate component 20 with an end face 21 and a central section 23, and a bearing surface 22. The locking arrangement is in an unlocked position.

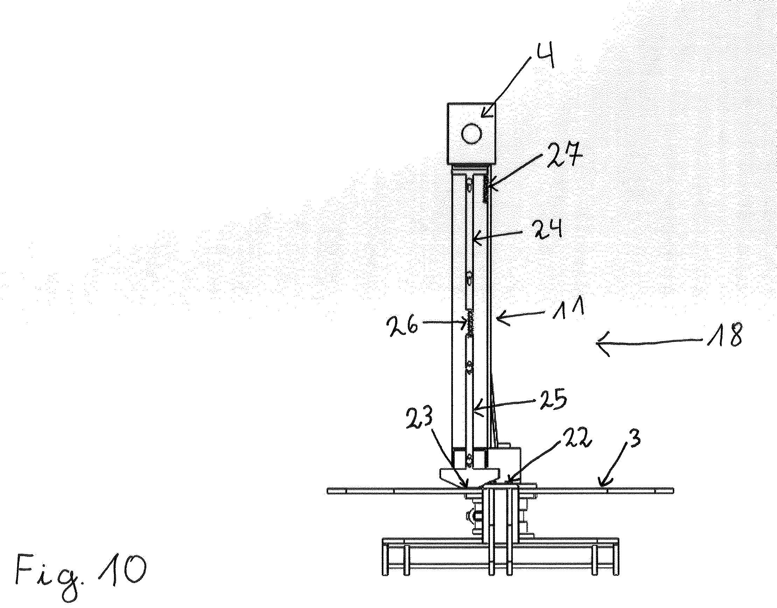

Fig. 10 shows the tool carrier from below. The tool comprises a second locking arrangement 18, which comprises a track 19, a first plate component 24 and a second plate component 25, which is connected to a compression spring 26. Optionally, the locking arrangement may comprise a tension spring 27. The locking arrangement is in the unlocked position.

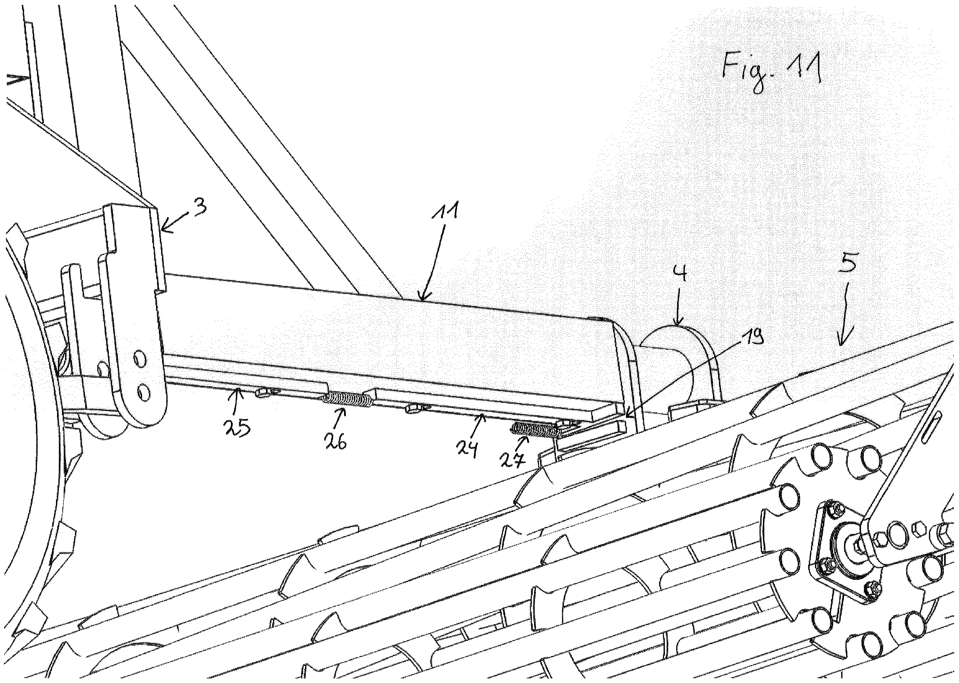

Fig. 11 shows a detail of the tool carrier 1 with the tool 5. The tool comprises a second locking arrangement 18, which comprises a track 19, a first plate component 24 and a second plate component 25, which is connected to a compression spring 26. Optionally, the locking arrangement may comprise a tension spring 27. The locking arrangement is in the locked position.

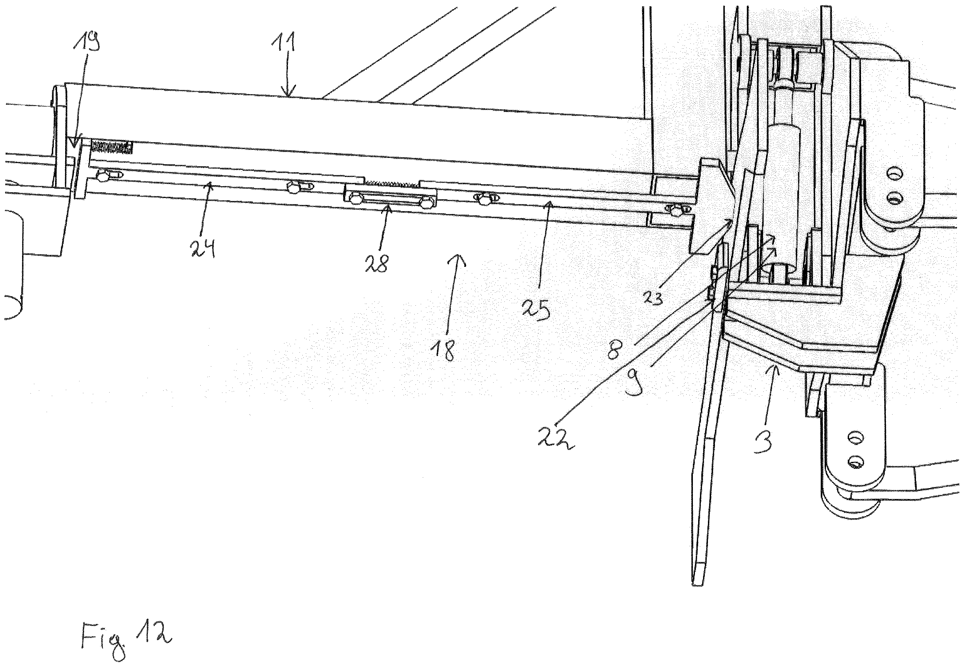

Fig. 12 shows a detail of the tool carrier. The tool comprises a second locking arrangement 18, which comprises a track 19, a first plate component 24 and a second plate component 25, which is connected to a compression spring 26, and a third plate component 28. Optionally, the locking arrangement may comprise a tension spring 27. The locking arrangement is in the unlocked position.

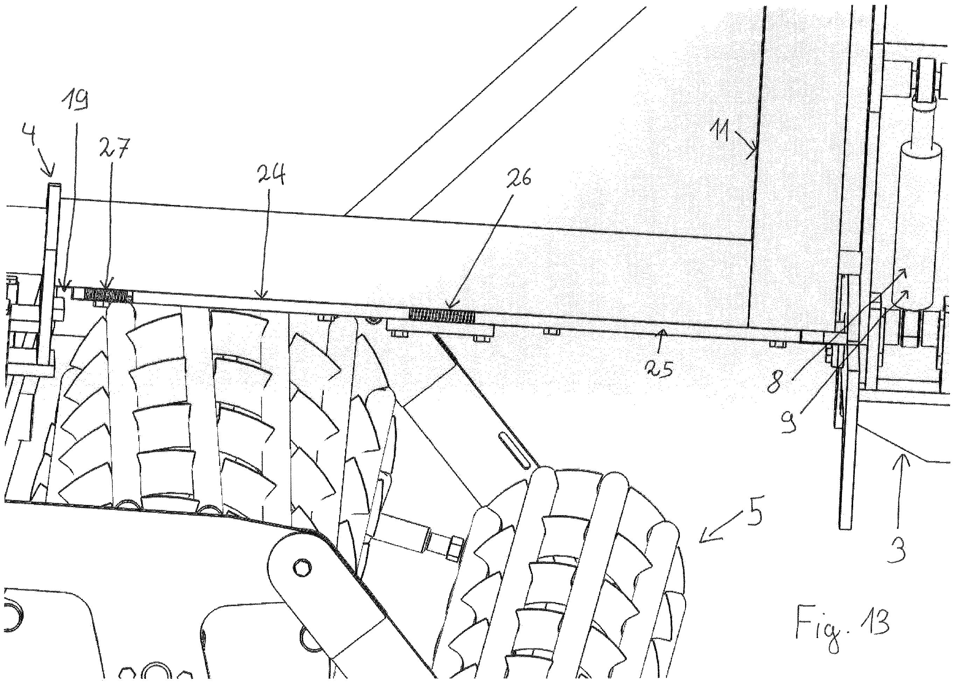

Fig. 13 shows a side view of a detail of the tool carrier 1 with the tool 5. The tool comprises a second locking arrangement 18, which comprises a track 19, a first plate component 24 and a second plate component 25, which is connected to a compression spring 26, and a third plate component 28. Optionally, the locking arrangement may comprise a tension spring 27. The locking arrangement is in the unlocked position.

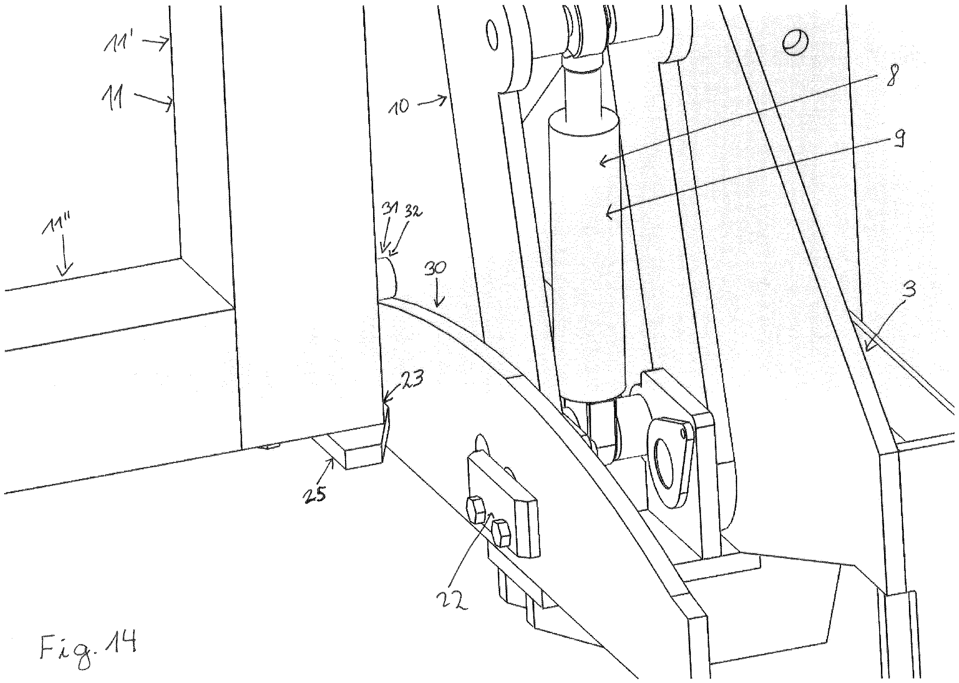

Fig. 14 shows a detail of the tool carrier 1. The tool carrier comprises a cam 31, preferably a cam roller 32, which interacts with a cam track 30 and defines the swivelling motion of the tool. At the same time, it locks the tool on the side the first arm 10 is on, if the first arm is not in a position perpendicular to the direction of motion 7.

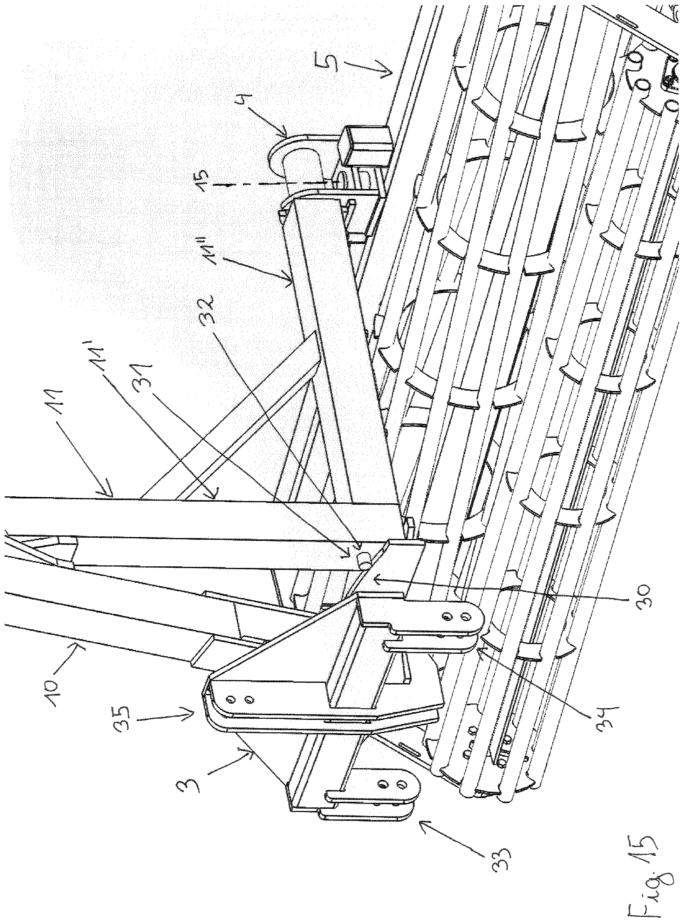

Fig. 15 shows a detail of the tool carrier 1 with the tool 5. The tool carrier comprises brackets for mounting on the lift 33, 34 and brackets for mounting on the top link 35.

## Claims

1. Tool carrier (1) for a vehicle (2), preferably a tractor, said tool carrier comprising a first frame (3) for mounting the tool carrier (1), and a second frame (4) for mounting a tool (5), where the tool carrier (1) comprises a swing-arm arrangement (6), where the tool carrier (1) has at least one extreme position with the second frame (4) in a position on one or other side of the vehicle's direction of motion (7), where the tool carrier (1) has a transport position with the second frame (4) in a position ahead of the vehicle's direction of motion (7), where the tool carrier (1) is provided with a first locking arrangement (8), for keeping the second frame (4) in a position between the extreme positions and the transport position, and where the tool carrier has actuating means (9), **characterized in that** the swing-arm arrangement (6) comprises a first arm (10) and a second arm (11) in a plane that is substantially perpendicular to the direction of motion (7), **in that** the first arm (10) is rotatable about a first shaft (12), which connects the first arm (10) to the first frame (3), **in that** the second arm (11) is rotatable about a second shaft (13), which connects the first arm (10) and the second arm (11), **in that** the first arm (10) and the second arm (11) are provided with mutually interacting stops (29', 29"), which define the extreme positions of the tool and bring about weight transfer from the first arm (10) to the tool (5), and **in that** the second frame (4) is rotatable about a third shaft (14), which connects the second frame (4) to the second arm (11), said shafts (12, 13, 14) being substantially parallel to one another and parallel to the direction of motion.

2. Tool carrier according to claim 1, **characterized in that** the second frame (4) comprises a fourth shaft (15), which is substantially perpendicular to the direction of motion (7), and connects a first part (16) and a second part (17) of the second frame.

3. Tool carrier (1) according to any one of the preceding claims, **characterized in that** it is provided with a second locking arrangement (18), which locks the tool (5) against rotation about the third shaft (14), where the locking arrangement (18) comprises a track (19) in the second frame (4), and a plate component (20), which is mounted movably on the second arm (11), and which, in a first locked position, is engaged with the track (19), and in a second unlocked position is outside the track (19).

4. Tool carrier according to claim 3, **characterized in that** the plate component (20) of the locking arrangement (18) has an end face (21), which is directed towards the first frame (3), said end face interacting with a bearing surface (22) on the first frame (3) or the first arm (10), and said end face (21) has a longer extent in a central section (23) than at the transition to the lateral faces of the plate component (24), so that the locking arrangement (18) is in a locked position when the tool is in the transport position with the first arm (10) and the second arm (11) perpendicular to the direction of motion, where the central section (23) is up against the bearing surface (22), and in an unlocked position when the tool (5) swings out to one or other side.

5. Tool carrier according to claim 3 or 4, **characterized in that** the plate component (20) of the second locking arrangement (18) comprises at least one first plate component (24) and one second plate component (25), which is connected to a compression spring (26).

6. Tool carrier according to any one of the preceding claims, **characterized in that** the second locking arrangement (18) comprises at least one tension spring (27), which is connected to the first plate component (24) and the second frame (4), and where the tension spring (27) has the effect that the locking arrangement (18) is in the unlocked position when the central section of the end face (23) is not up against the bearing surface (22), and has the effect that the locking arrangement (18) is in the locked position when the central section of the end face (23) is up against the bearing surface (22).

7. Tool carrier according to any one of the preceding claims, **characterized in that** the first frame (3) and the second arm (11) comprise a cam track (30) and an interacting cam (31), preferably a cam roller (32), which defines the swivelling motion of the tool, and locks the tool (5) to the side that the first arm (10) is on, when the first arm (10) is not in a position perpendicular to the direction of motion (7).

8. Tool carrier according to any one of the preceding claims, **characterized in that** the second arm (11) comprises two arm parts (11', 11") that are fitted perpendicular to each other, one arm part (11") being provided at an end farthest from the second shaft (13), so that the second arm (11) is L-shaped.

9. Tool carrier according to any one of the preceding claims, **characterized in that** it only comprises one actuating means (9), preferably a linear double-acting hydraulic actuator (9).
